# EUROPEAN PATENT APPLICATION

(11) **EP 1 156 642 A1**
(43) Date of publication of application: **21.11.2001**
(21) Application number: 00110625.1
(22) Date of filing: 18.05.2000
(51) Int. Cl.: H04M 1/19, H04M 1/02

(54) **Portable terminal with ergonomic earpiece**

(71) Applicant: Sony International (Europe) GmbH, 10785 Berlin (DE)
(72) Inventor: Lechner, Thomas, c/o Digital Telecomm., Europe, 85609 Aschheim (DE)
(74) Representative: Körber, Martin, Dipl.-Phys.

(57) **Abstract**

The present invention relates to a portable terminal (21) for a wireless communication system, the portable terminal (21) comprising a case and a loudspeaker, the case having an outlet (24) over said loudspeaker for passing acoustic signals output from said loudspeaker therethrough, wherein said case comprises a convex portion (22) on its surface, whereby said outlet (24) is provided on said convex portion (22) and said convex portion (22) is adapted to at least partially fit inside the auricle of a user.

## Description

The present invention relates to a portable terminal for a wireless communication system, the portable terminal comprising a case and a loudspeaker, the case having an outlet over said loudspeaker for passing acoustic signals output from said loudspeaker therethrough.

Portable terminals which are standard equipment in wireless (cellular) telephone and other communication systems consist basically of an earpiece comprising a loudspeaker and a mouthpiece comprising a microphone. The portable terminal is adapted for communication in a wireless communication system e.g. the GSM or the UMTS-system. The portable terminal either communicates directly with another portable terminal or with a base station of the wireless communication system. Typical transmission standards are e.g. DECT for in-house systems and GSM/UMTS for global telecommunication systems.

A handset preventing an earpiece section from being removed from an ear during speech to reduce leakage of a voice of an interlocutor and deterioration in sound quality during speech is disclosed by JP 0100243067.

During recent years, design has become more and more important when constructing portable terminals for wireless communication applications. The form no longer follows the function, the function has to follow the form. Modern cordless or mobile phones especially are getting smaller and smaller. In consequence, the earpiece of modern portable terminals covers just part of the auricle of a user. A tight closing contact between earpiece and auricle has become impossible. This results in deterioration of the sound quality. Especially the low frequencies in the receiving part are partially lost and surrounding noise reaches the ear of the user. As mobile phones are not generally used inside closed rooms but often "on the road", these surrounding noises are very problematic. If the user does not hold the portable terminal correctly (often the portable terminal is held just between the user's head and shoulder as the user needs to move his hands freely), the earpiece might be positioned wrongly with respect to the opening of the auditory canal, which leads to an additional loss of high frequencies and a loudness reduction.

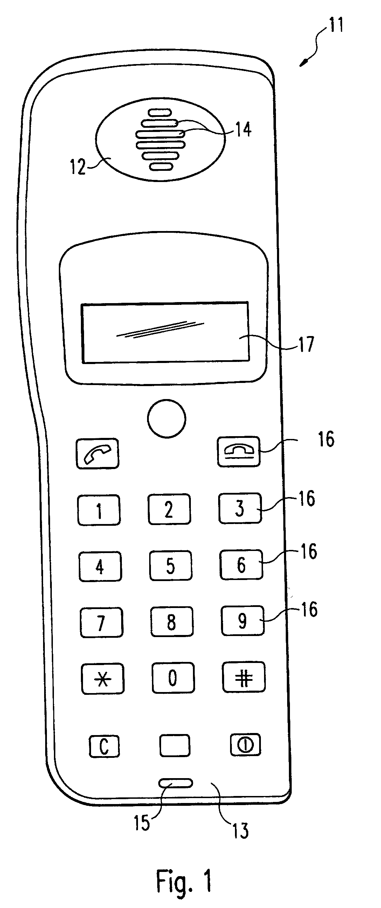

Such a typical portable terminal 11 used with wireless communication systems is shown in Fig. 1. It comprises an earpiece 12 and a mouthpiece 13, plural buttons 16 and a display 17. Outlets 14 and at least one inlet 15 for acoustic signals are provided on the surface of the portable terminal 11. The earpiece 12 usually used with portable terminals 11 for wireless communication systems is almost flat or slightly concave due to reasons of design and typically not large enough to superpose the whole ear of an user as the whole portable terminal 11 typically is not larger than about 45 mm to 140 mm in size. The earpiece 12 can not provide a sufficiently good sealing between the earpiece 12 and the user's ear due to its small size as the border of the user's auricle can not contact completely with the earpiece 12 and/or the portable terminal 11. Therefore heavy disturbances due to surrounding noises can occur.

It is therefore the object of the present invention to provide a portable terminal for a wireless communication system, the portable terminal comprising a case and a loudspeaker, the case having an outlet over said loudspeaker for passing acoustic signals output from said loudspeaker therethrough, in which the audibility of acoustic signals output from the loudspeaker is significantly improved.

The invention is defined in the independent claim. Further developments are set forth in the dependent claims.

According to the present invention, a portable terminal for a wireless communication system is provided, the portable terminal comprising a case and a loudspeaker, the case having an outlet over said loudspeaker for passing acoustic signals output from said loudspeaker therethrough, wherein said case comprises a convex portion on its surface, whereby said outlet is provided on said convex portion and said convex portion is adapted to at least partially fit inside the auricle of a user.

Due to the shape of the convex portion, the position of the portable terminal can be felt at the ear of a user and thus a wrong positioning of the outlet for acoustic signals and therefore loss of acoustic information can be avoided. In such a manner, the sound outlet can be aligned with the ear of a user and therefore a deterioration of the acoustic signals provided to a user's ear is avoided.

As according to the invention the convex portion is adapted to at least partially fit inside the auricle of a user a sufficient sealing between the earpiece and the user's auricle can be provided avoiding disturbance of the acoustic signal due to surrounding noise. Furthermore the positioning of the loudspeaker and the sound outlet in relation to the ear of the user is eased as the convex portion can be felt by the user's ear. Even further the position of the earpiece in relation to the user's ear is self adjusting due to the concave form of the earpiece.

Further advantageously, the outlet for acoustic signals is positioned and shaped so that the direction of the acoustic signals passing therethrough is aligned with the entrance of the ear auditory canal of a user. In a preferred embodiment the loudspeaker is tilted towards the outlet. Therefore, a loudness reduction can be further avoided and the quality of the acoustic signals reaching the ear of a user is guaranteed.

According to a further aspect of the present invention the convex portion provides a sealing between the portable terminal and the auricle of a user. Hereby it can be avoided that surrounding noises reach the ear of a user. It might be further advantageously if the convex portion comprises an elastic material. The use of an elastic material allows an adaptation of the convex portion to the auricle of a user and therefore a better sealing between the convex portion and the auricle of a user. It also provides more convenience to a user.

According to a further aspect of the present invention, the convex portion is an additional part to the case and is detachably fixed on the case. Therefore the earpiece can be adapted to different sized human ears in different continents or to male/female ears. Further it can individually be adapted to the auricle of a user or changed for hygienic reasons. If the convex portion is an additional part to the case it might comprise a detachable loudspeaker, too. Alternatively, the convex portion can be an integral part of the case. Thereby, the number of parts and the costs can be reduced.

In the following description, a preferred embodiment of the present invention is discussed in detail in relation to the enclosed drawings, in which
- Figure 1: shows a portable terminal for a wireless communication system according to the prior art,
- Figure 2: shows a portable terminal for a wireless communication system according to the invention.

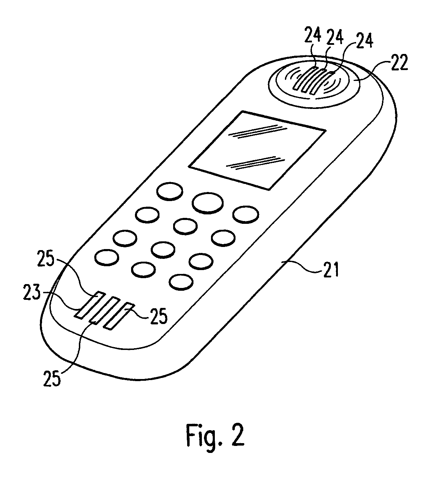

Figure 2 shows a portable terminal 21 for a wireless communication system according to the present invention. A convex portion 22 representing an earpiece is formed on the surface of a case of the portable terminal 21, wherein outlets 24 for acoustic signals are provided in said convex portion 22. The case of the portable terminal 21 further provides a mouthpiece 23. Inlets 25 for acoustic signals are provided on said mouthpiece 23 and a microphone is positioned under said inlets 25. A loudspeaker is positioned in line with the outlet 24 for acoustic signals in or behind the convex portion 22. Said loudspeaker is tilted towards the outlets 24. As the position of the outlets 24 can be felt by a user's ear due to the convex form of the earpiece a wrong positioning of the sound outlets in relation to a user's ear is avoided. Further the earpiece is positioned automatically centred in relation to the user's ear due to the convex form of the earpiece. Therefore loss of acoustic information can be avoided. Said convex portion 22 is formed to at least partially fit into a human's ear to provide a good sealing between the earpiece and the ear and to align the sound outlet 24 with the entrance of the ear auditory canal of a user. Hereby a deterioration of the acoustic signals supplied to a user's ear due to disturbing noises is avoided. If the convex portion 22 is shaped in the described way it can partially fit into the typical human ear and provide a sufficient sealing with the auricle. In this embodiment the convex portion 22 comprises an elastic material. The use of an elastic material allows an adaptation of the form of the convex portion 22 to the auricle of a user and therefore a better sealing between the convex portion 22 and the auricle of a user. Due to the soft surface of the elastic material it also provides more convenience to a user. In the described embodiment, the convex portion 22 forming the earpiece is an additional part to the case and is detachably fixed on the case. Thus it can individually be adapted to the auricle of a user. In addition, the convex portion 22 might be changed for hygienic reasons.

If the convex portion 22 is detachably fixed on the case the loudspeaker might be positioned within the convex portion 22 and contacts for electrically contacting the loudspeaker with the portable terminal 21 may be provided. Said contacts are provided on the case and on the convex portion 22 on respective matching locations.

Alternatively, the loudspeaker might be positioned inside the case of the portable terminal 21.

The convex portion 22 can be an integral part of the case, too. Thereby, the number of parts of the portable terminal 21 and thus costs can be reduced.

With a portable terminal according to the present invention, the positioning of the loudspeaker and the sound outlet in relation to the ear auditory channel of a user is eased and a better sealing between earpiece and auricle of the user is provided and thus deterioration or loss of acoustic information is avoided.

## Claims

1. Portable terminal (21) for a wireless communication system, the portable terminal (21) comprising a case and a loudspeaker, the case having an outlet (24) over said loudspeaker for passing acoustic signals output from said loudspeaker therethrough,
**characterised in**
**that** said case comprises a convex portion (22) on its surface, whereby said outlet (24) is provided on said convex portion (22) and said convex portion (22) is adapted to at least partially fit inside the auricle of a user.

2. Portable terminal (21) for a wireless communication system according to claim 1,
**characterised in**
**that** the outlet (24) is positioned and shaped so that the direction of the acoustic signals passing therethrough is aligned with the entrance of the ear auditory canal of a user.

3. Portable terminal (21) for a wireless communication system according to one of the preceding claims,
**characterised in**
**that** the loudspeaker is tilted towards the outlet (24).

4. Portable terminal (21) for a wireless communication system according to one of the preceding claims,
**characterised in**
**that** the convex portion (22) provides a sealing between the portable terminal (21) and the auricle of a user.

5. Portable terminal (21) for a wireless communication system according to claim 4,
**characterised in**
**that** the convex portion (22) comprises an elastic material.

6. Portable terminal (21) for a wireless communication system according to one of the preceding claims,
**characterised in**
**that** the convex portion (22) is an additional part to the case and is detachably fixed on the case.

7. Portable terminal (21) for a wireless communication system according to one of the claims 1 to 5,
**characterised in**
**that** the convex portion (22) is an integral part of the case.
